# EUROPÄISCHE PATENTSCHRIFT

(11) **EP 2 145 489 B1**
(45) Veröffentlichungstag und Bekanntmachung des Hinweises auf die Patenterteilung: **30.11.2011**
(21) Anmeldenummer: 08749794.7
(22) Anmeldetag: 28.04.2008
(51) Int. Cl.: H04W 4/02

(54) **VERFAHREN ZUM BEREITSTELLEN VON ORTSBEZOGENEN DIENSTEN ZU TEILNEHMERENDGERÄTEN EINES FUNKKOMMUNIKATIONSSYSTEMS**
METHOD FOR PROVIDING LOCATION-DEPENDENT SERVICES TO TERMINALS OF A RADIO COMMUNICATION SYSTEM
PROCÉDÉ POUR FOURNIR DES SERVICES CONTEXTUELS LOCAUX À DES TERMINAUX D'ABONNÉ D'UN SYSTÈME DE RADIOCOMMUNICATION

(30) Priorität: 04.05.2007 EP 07009069
(43) Veröffentlichungstag der Anmeldung: 20.01.2010
(73) Patentinhaber: Siemens Aktiengesellschaft, 80333 München (DE)
(72) Erfinder: DRUZINIC-FIEBACH, Rok, 16548 Glienicke (DE); LEHMANN, Gerald, 12101 Berlin (DE)
(86) Internationale Anmeldenummer: PCT/EP2008/055170
(87) Internationale Veröffentlichungsnummer: WO 2008/135432

(56) Entgegenhaltungen:
- WO-A-01/44831
- WO-A-2006/033607
- US-A1- 2006 035 661
- US-A1- 2006 079 246

## Beschreibung

Die Erfindung betrifft ein Verfahren sowie Systemkomponenten zum Bereitstellen von ortsbezogenen Diensten zu Endgeräten von Teilnehmern eines Funkkommunikationssystems, sowie Funkstationen, insbesondere einen Bakensender sowie ein Teilnehmerendgerät, mit Einrichtungen zum Durchführen des erfindungsgemäßen Verfahrens.

Teilnehmern von Funkkommunikationssystemen, die beispielsweise auf den bekannten Kommunikationsstandards GSM (Global System for Mobile Communications) oder UMTS (Universal Mobile Telecommunications System) basieren, sollen zunehmend Daten so genannter ortsbezogener Dienste (engl. Location Based Services; LBS) zur Verfügung gestellt werden. Daten ortsbezogener Dienste werden dabei zwischen dem System bzw. speziellen Systemkomponenten und dem Endgerät des Teilnehmers ausgetauscht, wenn sich der Teilnehmer in einem geographischen Gebiet aufhält, in dem der Dienst verfügbar und somit für die Teilnehmerstation ausführbar ist. Einige ortsbezogene Dienste sehen beispielsweise einen ständigen Vergleich der aktuellen Position der Teilnehmerstation mit vorher bestimmten Gebieten vor. Befindet sich die Teilnehmerstation in einem dieser Gebiete, so wird ein bestimmter Dienst aktiviert. Diese Art der Dienstaktivierung wird auch als "Location Area Based Triggering" bezeichnet. Eine Information über den aktuellen Aufenthaltsort der Teilnehmerstation kann gemäß unterschiedlicher bekannter Positionierungsverfahren erfolgen, wie sie unter anderem in der EP 1 753 250 A1 aufgeführt sind. Voraussetzung sind dabei jedoch aufwändige Positionierungsverfahren und gegebenenfalls die Implementierung eines Positionierungsempfängers in dem Endgerät.

Auch von einem Funkkommunikationssystem unabhängige Funkübertragungsverfahren werden bereits für die Verwirklichung ortsbezogener Dienste eingesetzt. Hierzu werden beispielsweise so genannte Nahbereichsfunktechnologien wie Bluetooth, ZigBee, RFID oder NFC, mit einer typischen Reichweite von lediglich einigen Metern verwendet. Beispielsweise kann ein mit einer Bluetooth-Sende-/Empfangseinrichtung ausgestattetes Teilnehmerendgerät mit Werbepostern, Schaufenstern oder Plakatwänden interagieren, sodass dem Teilnehmer beim Vorübergehen hierzu ergänzende Informationen oder Hinweise über die Bluetooth-Funkschnittstelle auf sein Endgerät übertragen werden, und dieser bei Interesse gegebenenfalls über ein Kontextmenü weitere Informationen anfordern kann. Ein Beispiel hierfür ist auf der Internetseite http://networks.silicon.com/mobile/0,39024665,39166634,00.htm beschrieben. In diesem Beispiel basiert das Aktivieren des Dienstes auf dem so genannten Device-Discovery-Protokoll des Bluetooth-Standards, mit dessen Hilfe benachbarte Endgeräte mit Bluetooth-Funktionalität entdeckt und automatisch angesprochen werden können. Voraussetzung ist dabei jedoch, dass das Endgerät über diese zusätzlichen Module verfügt und der Teilnehmer diese Funktionalität aktiviert hat.

Aus der WO 2006/033607 A ist ein Lokalisierungsverfahren basierend auf Textnachrichten bekannt, bei dem von einer Basisstation oder einem davon getrennten Transmitter Textnachrichten ausgesendet werden. Die Einbindung dieser Nachrichten in Dienstanfragen eines mobilen Endgerätes ermöglicht in dem Netzwerk einen Rückschluss auf die Position des Endgerätes, welche für die Bereitstellung des angeforderten Dienstes berücksichtigt werden kann.

Aufgabe der vorliegenden Erfindung ist es daher, ein Verfahren sowie Systemkomponenten anzugeben, die eine effiziente und kostengünstige Realisierung von ortsbezogenen Diensten ermöglichen. Diese Aufgabe wird durch die Merkmale der unabhängigen Patentansprüche gelöst. Vorteilhafte Weiterbildungen der Erfindung sind abhängigen Patentansprüchen entnehmbar. Erfindungsgemäß ist ein Verfahren zum Bereitstellen ortsbezogener Dienste für ein Teilnehmerendgerät eines Funkkommunikationssystems vorgesehen, bei dem das Teilnehmerendgerät Informationen bezüglich zumindest eines Dienstes von einem lokalen Bakensender empfängt, wobei Aussendungen des Bakensenders kompatibel zu Aussendungen einer Basisstation des Funkkommunikationssystems, in deren Funkzelle sich der Bakensender befindet, sind. Das Teilnehmerendgerät wertet anschlie-βend die empfangenen Informationen aus und initiiert abhängig von dem Ergebnis der Auswertung einen Verbindungsaufbau zu einer Basisstation des Funkkommunikationssystems.

Um eine Kompatibilität der Aussendungen der Basisstation und des Bakensenders sicherzustellen, verwendet der Bakensender das gleiche bzw. einen Teilbereich des Frequenzbandes der Basisstation und synchronisiert beispielsweise seine Aussendungen auf die Zeitstruktur der Basisstation. Für den beispielhaften Fall eines von der Basisstation unterstützten UMTS-Standards kann der Bakensender alternativ oder ergänzend zur Unterscheidung der eigenen Aussendungen von Signalen der Basisstation auch unterschiedliche Spreizcodes, so genannte CDMA-Codes, verwenden.

Erfindungsgemäß werden die von dem Bakensender ausgesendeten Informationen in einem Rundsendekanal übertragen, welcher kompatibel zu einem von der Basisstation ausgesendeten Rundsendekanal ist. Ferner wird in dem Rundsendekanal oder einem Signalisierungskanal der Basisstation auf den Rundsendekanal des Bakensenders verwiesen. Der Rundsendekanal des Bakensenders kann in dem beispielhaften Fall einer Unterstützung des UMTS-Standards ein so genannter S-CCPCH-Kanal sein, auf dessen Existenz in dem so genannten Rundsendekanal (P-CCPCH) bzw. Sigalisierungskanal PICH der Basisstation verwiesen wird.

Gemäß einer Weiterbildung der Erfindung verwendet das Teilnehmerendgerät bei einer derart gegebenen Kompatibilität eine

Sende-/Empfangseinrichtung sowohl zum Senden/Empfangen von Signalen zu/von der Basisstation des Funkkommunikationssystems als auch zum Empfangen der Informationen des Bakensenders. Hierdurch ist es vorteilhaft keine Voraussetzung für den Empfang ortsbezogener Dienste, dass das Teilnehmerendgerät mit zusätzlichen Einrichtungen für beispielsweise eine Nahbereichskommunikation ausgestattet ist, welche ergänzend von dem Teilnehmer aktiviert werden müssen.

Gemäß einer weiteren Weiterbildung der Erfindung empfängt das Teilnehmerendgerät nach Aufbau der Verbindung zu der Basisstation weitere dienstbezogene Informationen von einem Diensteserver über die Basisstation des Funkkommunikationssystems. Diese weiteren dienstbezogenen Informationen werden von der Basisstation beispielsweise in einem Verkehrskanal, beispielsweise einem so genannten dedizierten Kanal (engl. Dedicated Channel; DCH) oder einem von mehreren Teilnehmerendgeräten gemeinsam genutzten Kanal (engl. Shared Channel) gemäß dem unterstützten Kommunikationsstandard, übertragen.

Einer weiteren Weiterbildung zufolge wertet das Teilnehmerendgerät die von dem Bakensender empfangenen Informationen durch einen Vergleich mit zumindest einem in dem Teilnehmerendgerät gespeicherten Nutzerprofil aus, woraufhin es erst bei zumindest einer Übereinstimmung zwischen empfangenen Informationen und Parametern des Nutzerprofils den Aufbau einer Verbindung zu der Basisstation initiiert. Hierdurch wird vorteilhaft erreicht, dass ein Verbindungsaufbau zu dem Funkkommunikationssystem nur dann erfolgt, wenn die angebotenen Informationen von Interesse für den Teilnehmer sind. Das Nutzerprofil kann dabei beispielsweise von dem Teilnehmer selbst konfiguriert werden, aber auch seitens des Systembetreibers in einer SIM-Karte (Subscriber Identity Module) des Teilnehmers hinterlegt sein und für das Teilnehmerendgerät zugreifbar. Ergänzend kann es sinnvoll bzw. erforderlich sein, dass vor einem Verbindungsaufbau zu dem Funkkommunikationssystem eine Bestätigung des Teilnehmers erfolgen muss, beispielsweise bei der Realisierung von Bezahlvorgängen.

Einer weiteren Weiterbildung zufolge empfängt das Teilnehmerendgerät neben den dienstbezogenen Informationen zumindest eine Identifikationsinformation des Bakensenders, welche das Teilnehmerendgerät bei einem Aufbau einer Verbindung zu der Basisstation dem Funkkommunikationssystem signalisiert. Hierdurch kann vorteilhaft systemseitig zwischen mehreren in der Funkzelle der Basisstation befindlichen Bakensendern unterschieden werden, sodass nur den speziellen Bakensender betreffende ergänzende dienstbezogene Informationen zu dem Teilnehmerendgerät übertragen werden. Alternativ kann in gleicher Weise die Identifikationsinformation des Bakensenders auch erst nach erfolgtem Verbindungsaufbau zu dem Funkkommunikationssystem signalisiert werden.

Ein erfindungsgemäßer Bakensender sowie ein Teilnehmerendgerät weisen jeweils Einrichtungen auf, mit denen die erfindungsgemäßen Verfahren durchgeführt werden können.

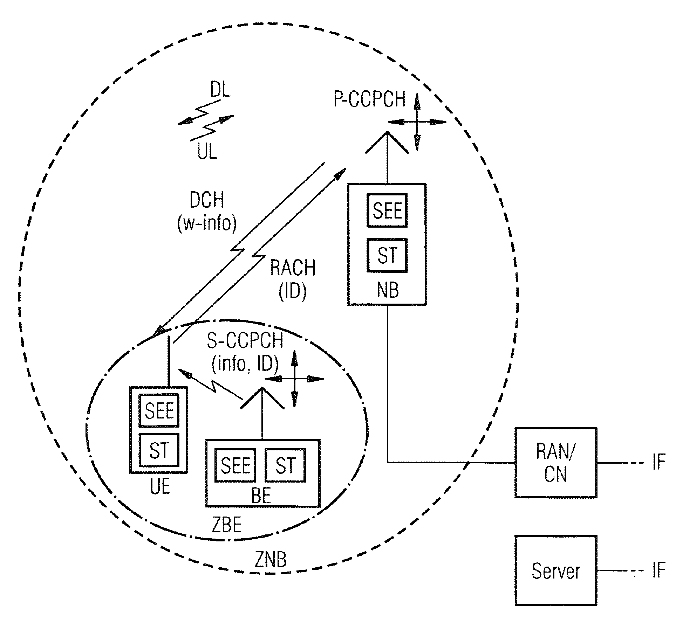

Die Erfindung wird im Folgenden anhand eines in FIG 1 dargestellten Ausführungsbeispiels näher erläutert, wobei FIG 1 ein Blockschaltbild erfindungsrelevanter Systemkomponenten sowie Signalisierungen zeigt.

FIG 1 zeigt beispielhaft Komponenten eines Funkkommunikationssystems, welches den bekannten, im Rahmen der 3GPP (3rd Generation Partnership Projekt) spezifizierten Kommunikationsstandard UMTS unterstützt. Eine Basisstation NB (Node B) versorgt zumindest eine so genannte Funkzelle ZNB mit funktechnischen Ressourcen, und weist zumindest eine Sende-/Empfangseinrichtung SEE zur funkbasierten Kommunikation mit innerhalb der Funkzelle ZNB befindlichen Teilnehmerendgeräten UE (User Equipment) gemäß dem unterstützten Kommunikationsstandard, sowie eine Steuereinrichtung ST zur Steuerung der zahlreichen Funktionalitäten der Basisstation NB auf. Die Basisstation NB ist systemseitig mit weiteren Komponenten des so genannten Funkzugangsnetzes (Radio Access Network; RAN), beispielsweise einer Funknetzsteuerung (Radio Network Controller; RNC) und/oder einem so genannten Zugangsnetzübergang (Access Gateway; aGW), sowie des so genannten Kernnetzes (Core Network; CN) verbunden. Das Kernnetz CN ist wiederum, beispielsweise über ein Internet-Protokoll (IP) basiertes Datennetz, mit einem Diensteserver Server verbunden, welcher Dienstinhalte zur Verfügung stellt. Unter einem Datennetz ist beispielsweise das Internet oder ein Festnetz mit beispielsweise leitungsvermittelten oder paketvermittelten Verbindungen für z.B. Sprache und/oder Daten zu verstehen.

Innerhalb des geographischen Versorgungsbereiches der Funkzelle ZNB der Basisstation NB befindet sich nach dem Beispiel der FIG 1 weiterhin ein so genannter Bakensender BE, welcher periodisch Informationen eines Diensteanbieters mit einer im Vergleich zu der Sendeleistung der Basisstation NB geringen Sendeleistung in einem geographischen Gebiet einer Funkzelle ZBE aussendet. Dieser Bakensender BE ist gegebenenfalls ebenso mit dem Diensteserver Server über ein Datennetz verbunden für einen Zugriff auf aktuell in dem Server hinterlegte dienstbezogene Informationen. Auch der Bakensender BE ist zumindest mit einer Sende-/Empfangseinrichtung SEE sowie einer Steuereinrichtung ST ausgestattet, wobei gegebenenfalls von einer Realisierung einer Empfangseinrichtung abgesehen werden kann, wenn der Bakensender BE allein zum Aussenden von Informationen, nicht jedoch zur Interaktion mit Teilnehmerendgeräten UE ausgestaltet sein soll. Der Bakensender BE führt somit zumindest teilweise Funktionen einer Basisstation des Funkkommunikationssystems gemäß dem unterstützten Kommunikationsstandard aus, ohne selbst mit diesem verbunden sein zu müssen. Der Bakensender BE kann sowohl ortsfest als auch beweglich verwirklicht sein, wobei für den Fall eines beweglichen Bakensenders dieser beispielsweise als ein Teilnehmerendgerät oder als eine Teilfunktionalität eines Teilnehmerendgerätes verwirklicht sein kann.

Sofern eine Vielzahl von Bakensendern BE in relativer Nähe zueinander aufgestellt werden, beispielsweise an mehreren Kaufhäusern einer städtischen Einkaufsstraße, ist eine entsprechende Koordination der Aussendungen dieser mehreren Sender sowie der Basisstation NB erforderlich, um eine gegenseitige negative Interferenzbeeinflussung zu vermeiden. Dies kann für den Fall, dass die Bakensender BE eine gleiche Funkressource verwenden, beispielsweise durch Einhaltung eines Mindestabstands erfolgen, oder auch durch Zuweisung unterschiedlicher Funkressourcen, beispielsweise unterschiedlicher CDMA-Kodes oder Zeitschlitze bei Aussendungen gemäß dem UMTS-Standard.

Das beispielhaft dargestellte Teilnehmerendgerät UE weist zumindest eine Sende-/Empfangseinrichtung SEE zur funkbasierten Kommunikation mit der Basisstation NB bzw. dem Bakensender BE gemäß dem unterstützten Kommunikationsstandard, sowie eine Steuereinrichtung ST zur Steuerung der zahlreichen Funktionalitäten des Teilnehmerendgerätes UE auf. Ein Teilnehmerendgerät UE ist beispielsweise ein Mobiltelefon oder auch eine ortsbewegliche oder ortsfeste Vorrichtung zur Übertragung von Bild- und/oder Tondaten, zum Fax-, Short Message Service SMS-, Multimedia Messaging Service MMS- und/oder Email-Versand und/oder zum Internet-Zugang.

Die Erfindung kann vorteilhaft in beliebigen Funkkommunikationssystemen verwendet werden. Unter Funkkommunikationssystemen sind dabei Systeme zu verstehen, in denen eine Datenübertragung zwischen Funkstationen über eine Funkschnittstelle erfolgt. Die Datenübertragung kann sowohl bidirektional als auch unidirektional in Aufwärts- UL (Uplink) und Abwärtsübertragungsrichtung DL (Downlink) erfolgen. Funkkommunikationssysteme sind insbesondere beliebige Mobilfunksysteme, beispielsweise nach dem GSM-(Global System for Mobile Communications) oder dem UMTS-(Universal Mobile Telecommunications System) Standard. Auch zukünftige Mobilfunksysteme, beispielsweise der vierten Generation, sowie Ad-hoc-Netze sollen unter Funkkommunikationssystemen verstanden werden. Funkkommunikationssysteme sind ferner beispielsweise auch drahtlose lokale Netze (WLANs: Wireless Local Area Networks) gemäß den Standards IEEE (Institute of Electrical and Electronics Engineers) 802.11a-i, HiperLAN1 und HiperLAN2 (HiperLAN: High performance radio Local Area Network) sowie Breitbandnetze mit drahtlosem Zugang beispielsweise gemäß dem so genannten WiMAX-Standard IEEE 802.16.

Nach dem Beispiel der FIG 1 sei angenommen, dass der Bakensender BE vor einem Kaufhaus bzw. in unmittelbarer Nähe dieses Kaufhauses aufgestellt bzw. montiert ist, und in der näheren Umgebung des Kaufhauses Informationen über beispielsweise aktuelle Angebote des Kaufhauses periodisch aussendet. Der Bakensender BE verwendet das gleiche Frequenzspektrum wie die Basisstation NB, in deren Funkzelle ZNB der Bakensender BE montiert ist. Die von dem Bakensender BE ausgesendeten Signale sind dabei zu den von der Basisstation NB ausgesendeten Signalen kompatibel, werden jedoch mit einer vergleichsweise geringen Sendeleistung abgestrahlt. Typischerweise sollte die Sendeleistung dabei so bemessen werden, dass eine Empfangbarkeit der Signale des Bakensenders BE in einem Umkreis von ca. 5 bis 50 Metern durch Teilnehmerendgeräte UE möglich ist. Eine Kompatibilität der Aussendungen des Bakensenders BE wird beispielsweise dadurch sichergestellt, dass die Signale zeitlich synchronisiert zu den Signalen der Basisstation NB ausgesendet werden und/oder die Existenz dieser Signale in den Signalen der Basisstation NB angezeigt werden, d.h. ein Verweis auf die Aussendungen des Bakensenders signalisiert werden. Eine derartige Kompatibilität bietet dabei den Vorteil, dass mit den in dem Teilnehmerendgerät UE vorhandenen Komponenten sowohl eine Kommunikation mit der Basisstation NB des Funkkommunikationssystems als auch mit dem Bakensender möglich ist, ohne dass ergänzende Funkkommunikationsstandards bzw. Nahbereichsfunktechnologien unterstützt und aktiviert sein müssen.

Nach dem Beispiel der FIG 1 sei ferner angenommen, dass sich das Teilnehmerendgerät UE in dem so genannten Bereitschaftszustand (engl. Idle Mode) befindet, wobei sich das Teilnehmerendgerät UE zur Realisierung der Erfindung in gleicher Weise auch in einem aktiven Zustand (engl. Active Mode) befinden kann. Der Bereitschaftszustand bedeutet, dass das Teilnehmerendgerät UE keine aktive Verbindung zur Übertragung von Nutzdaten zu dem Funkkommunikationssystem unterhält, jedoch besteht in diesem Zustand eine Verbindung zur Übertragung von Signalisierungsinformationen. Das Teilnehmerendgerät UE empfängt Signale der Basisstation NB, die diese in dem so genannten Rundsendekanal (engl. Broadcast Channel; BCH) bzw. dem entsprechenden physikalischen Kanal P-CCPCH (Primary-Common Control Physical Channel) bzw. Sigalisierungskanal PICH (Page Indicator Channel) aussendet. Über den P-CCPCH werden für den Betrieb von sich innerhalb der Funkzelle ZNB der Basisstation NB aufhaltenden Teilnehmerendgeräten UE relevante Informationen übertragen.

Der Bakensender BE verwendet nach dem Beispiel der FIG 1 hingegen einen standardkonformen, jedoch gegebenenfalls speziell angepassten, zusätzlichen physikalischen Kanal S-CCPCH (Secondary-Common Control Physical Channel) für die Übertragung von Informationen. Dabei wird beispielsweise der Funkzell-Rundsendekanal (Cell Broadcast Control Channel; CBCH) des Bakensenders BE auf den so genannten FACH (Forward Access Channel) abgebildet, welcher wiederum Teil des S-CCPCH ist. Weiterhin verwendet der Bakensender BE beispielsweise den gleichen Funkzellkode wie die Basisstation NB, in deren Funkzelle ZNB sich der Bakensender BE befindet.

Gemäß nach dem UMTS-Standard spezifizierten bekannten Mechanismen wird dem Teilnehmerendgerät UE die Existenz eines S-CCPCH, und auf welchen Funkressourcen dieser empfangbar ist, signalisiert. Bei mehreren existierenden S-CCPCHs in der Funkzelle ZNB der Basisstation NB werden entsprechende Angaben zu den mehreren S-CCPCHs signalisiert. Nach Empfang dieser Signalisierung versucht das Teilnehmerendgerät UE, Signale des S-CCPCH zu empfangen. Sofern, wie in dem Beispiel der FIG 1, sich das Teilnehmerendgerät UE in der Funkzelle ZBE des Bakensenders BE befindet, sollte dies möglich sein, hingegen würde ein sich außerhalb der Funkzelle ZBE des Bakensenders BE befindliches Teilnehmerendgerät nach einem oder mehreren erfolglosen Versuchen des Empfangs von Signalen des S-CCPCH dieses einstellen bzw. nur in periodischen Zeitabständen erneut versuchen.

Bei einem möglichen Empfang von Signalen des Bakensenders BE auf dem S-CCPCH ist das Teilnehmerendgerät UE in der Lage, darin enthaltene Nutzinformationen info, wie die vorstehend beispielhaft angegebenen aktuellen Angebote eines Kaufhauses oder auch Kennungen, unter deren Bezugnahme vom Teilnehmer weitere Informationen angefordert werden können, zu empfangen und an dem Teilnehmerendgerät UE über entsprechende Nutzerschnittstellen optisch und/oder akustisch auszugeben.

Um zu verhindern, dass dem Teilnehmer laufend ungewünschte Informationen derartiger Bakensender über das Teilnehmerendgerät ausgegeben werden bzw. das Teilnehmerendgerät autonom Verbindungen zu einem Diensteserver aufbaut, kann beispielsweise ein -gegebenenfalls auch mehrere- so genanntes Nutzerprofil in dem Teilnehmerendgerät UE konfiguriert und gespeichert sein. Dieses Nutzerprofil kann dabei von dem Teilnehmer selbst nach eigenen Bedürfnissen und Wünschen, aber auch von dem Betreiber des Funkkommunikationssystems anhand von dem Teilnehmer auswählbarer vordefinierter Profilangebote konfiguriert werden. Beispielsweise definiert das Nutzerprofil Interessen, Vorlieben, Hobbys, persönliche Daten etc. des Teilnehmers. Das Anlegen und Speichern eines Nutzerprofils sowie ein Abgleich mit empfangenen Informationen kann beispielsweise von der beschriebenen Steuereinrichtung ST des Teilnehmerendgerätes UE durchgeführt, das Nutzerprofil selbst in einer Speichereinrichtung des Teilnehmerendgerätes gespeichert werden.

Ebenso sollte gegebenenfalls verhindert werden, dass sobald sich das Teilnehmerendgerät UE in der Funkzelle ZBE des Bakensenders BE befindet, eine Auswertung von empfangenen Informationen info erfolgt, da hierdurch auch das sich mit einer höheren Geschwindigkeit bewegende Teilnehmerendgerät eine Signalisierungslast auf der Funkschnittstelle aufgrund der Initiierung eines Verbindungsaufbaus zu dem Funkkommunikationssystem verursachen würde, obwohl es sich zum Zeitpunkt des möglichen Empfangs von ergänzenden Informationen seitens der Basisstation NB schon nicht mehr in der Funkzelle ZBE des Bakensenders aufhält. Hierzu kann, beispielsweise in Verbindung mit dem Nutzerprofil, ein Zeitintervall vorgesehen werden, welches einen Zeitraum definiert, innerhalb dessen das Teilnehmerendgerät UE zumindest Informationen des Bakensenders BE empfangen muss, d.h. sich in der Funkzelle ZBE des Bakensenders BE aufhält, bevor ein Verbindungsaufbau initiiert wird.

Nach Empfang von Informationen info in dem S-CCPCH werden diese mit dem Nutzerprofil verglichen, und nur bei Übereinstimmung eine Ausgabe gegenüber dem Teilnehmer sowie gegebenenfalls ein Verbindungsaufbau zu einem Diensteserver veranlasst. Hierzu werden sowohl die Nutzinformationen des S-CCPCH als auch die Einträge des Nutzerprofils klassifiziert. So kann beispielsweise das Interesse einer weiblichen Teilnehmerin an Damenschuhen in dem Nutzerprofil mit Angabe der Klasse "S-D" und einem zugehörigen binären Status "1" (=Interesse) hinterlegt werden, während das mangelnde Interesse der Teilnehmerin an Herrenschuhen in dem Nutzerprofil mit der Klasse "S-M" sowie einem zugehörigen binären Status "0" (=kein Interesse) hinterlegt wird. Sofern nun das Kaufhaus mittels des Bakensenders BE aktuell Informationen sowohl der Klasse "S-D" als auch der Klasse "S-M" aussendet, werden nach Abgleich der von dem Teilnehmerendgerät UE der Teilnehmerin empfangenen Informationen mit dem Nutzerprofil lediglich die Information zu der Klasse "S-D" an dem Teilnehmerendgerät UE der Teilnehmerin ausgegeben.

Neben einer direkten Übertragung von Informationen zu aktuellen Angeboten eines Kaufhauses, die von empfangenden Teilnehmerendgeräten direkt ausgegeben werden können, kann es aufgrund einer zu großen Menge derartiger Informationen sinnvoll sein, dass Teilnehmern zunächst nur in einem geringen Umfang Informationen zu aktuellen Angeboten signalisiert werden, und detailierte Informationen aktiv von den Teilnehmern von dem Diensteserver abgerufen werden müssen. In dem obigen Beispiel könnte dies derart erfolgen, dass der Teilnehmerin zunächst lediglich ausgegeben wird, dass das Kaufhaus aktuell günstige Angebote zu Damenschuhen offeriert, und weiterführende Informationen hierzu über den Link einer angegebenen Internetseite einsehbar sind. Durch Auswahl des Links der Internetseite durch die Teilnehmerin wird nachfolgend ein Verbindungsaufbau zu dem Funkkommunikationssystem gemäß einem bekannten Protokoll des Kommunikationsstandards, beispielsweise unter Nutzung des so genannten zufallsgesteuerten Zugriffskanals RACH (Random Access Channel), sowie den Diensteserver initiiert. Nach erfolgtem Verbindungsaufbau werden dem Teilnehmerendgerät UE weitere dienstbezogene Informationen w-info von dem Diensteserver Server über die Basisstation NB zur Verfügung gestellt, wobei diese beispielsweise in einem so genannten dedizierten Kanal DCH (engl. Dedicated Channel) oder einem von mehreren Teilnehmerendgeräten gemeinsam genutzten Kanal übertragen werden. Alternativ kann die Teilnehmerin mittels des Links auch die Zusendung beispielsweise einer bekannten SMS- (Short Message Service) oder MMS-Nachricht (Multimedia Message Service) mit den gewünschten detailierten Informationen anfordern. Da ein Verbindungsaufbau zum Herunterladen von Daten von dem Diensteserver in der Regel eine Vergebührung zur Folge hat, ist es mithin sinnvoll, dass dieser zunächst von der Teilnehmerin akzeptiert werden muss, sofern nicht das Kaufhaus die entstehenden Kosten übernimmt.

Da von dem Diensteserver Server eines Diensteanbieters (engl. Service Provider) in der Regel große Mengen unterschiedlicher Informationen verwaltet werden, ist es sinnvoll, bei einem Verbindungsaufbau zu diesem Server über das Funkkommunikationssystem zumindest eine von dem Bakensender BE empfangene Kennung ID des Bakensenders sowie gegebenenfalls Angaben zu den gewünschten Informationen zu übertragen. Anhand dieser Angaben kann der Diensteserver Server dann die von der Teilnehmerin gewünschten Informationen bereitstellen.

Neben einem Einsatz des vorstehend beschriebenen Verfahrens zur Übertragung von Werbung oder sonstigen Produktinformationen an potenzielle Kunden eines Kaufhauses kann das erfindungsgemäße Verfahren in gleicher Weise für beispielsweise eine ortsabhängig Registrierung des Teilnehmers oder auch für Bezahlvorgänge verwendet werden. So ist es denkbar, dass im Eingangsbereich eines Kinos den Gästen auf ihren Teilnehmerendgeräten signalisiert wird, dass sie dieses zum einen während der folgenden Vorstellung abschalten sollten, um andere Gäste nicht zu stören, zum anderen mittels eines Verbindungsaufbaus zu einem Diensteserver bzw. einer bestimmten Internetseite des Diensteanbieters, beispielsweise des Kinobetreibers, die Zahlung der Eintrittskarten durch Belastung ihres Telekommunikationsvertrages erfolgen kann. Veranlasst der Gast daraufhin einen Verbindungsaufbau zu dem Diensteserver und gibt gegebenenfalls gewünschte ergänzende Informationen zur Registrierung für dieses Verfahren an, so erfolgt mittels einer systemseitigen Interaktion zwischen Diensteserver und Funkkommunikationssystem eine entsprechende Vergebührung.

Um den Bakensender BE bzw. dessen S-CCPCH betreffende Informationen in Rundsendekanälen wie beispielsweise dem P-CCPCH bzw. in Signalsierungskanälen wie beispielsweise dem PICH) der Basisstation NB auszusenden, ist es erforderlich, dass das Funkkommunikationssystem diese Informationen erhält. Unabhängig von diesen Informationen jedoch kann die Konfiguration des Bakensenders BE, insbesondere dessen Kompatibilität zu den Signalen der Basisstation NB, in dessen Funkzelle ZNB er sich befindet, von diesem selbst ohne direkten Anschluss an das Funkkommunikationssystem erfolgen. So kann der Bakensender zur zeitlichen Synchronisation der eigenen Aussendungen zu Aussendungen der Basisstation NB während einer einmaligen oder periodisch durchgeführten Initialisierungsphase die so genannten Systemrahmennummer (System Frame Number; SFN) der Basisstation NB, welche beispielsweise in dem P-CCPCH übertragen wird und als Zeitreferenz für alle physikalischen Kanäle in Abwärtsübertragungsrichtung der Basisstation NB dient, empfangen. Hierzu sei beispielhaft auf die technische Spezifikation 3GPP TS 25.211 V6.7.0 (12-2005) "Physical channels and mapping of transport channels onto physical channels (FDD) (Release 6)" verwiesen. Der entsprechende von dem Bakensender BE ausgesendete S-CCPCH sollte sich ebenfalls auf diese Zeitreferenz beziehen, um Teilnehmerendgeräten eine schnelle Detektion dieses Kanals zu ermöglichen.

Die Signale des Bakensenders können somit Informationen über beispielsweise die Bakenidentität, eine Klassifizierung des oder der angebotenen Dienste, beispielsweise bezüglich des Inhalts, der Registrierung oder der Bezahlung, weitergehende Informationen oder Kennungen des Dienstes, wie beispielsweise eine sekundäre Klassifizierung für einen Abgleich mit dem Nutzerprofil, sowie Adressen oder Rufnummern für einen nachfolgenden Verbindungsaufbau enthalten, wobei diese Informationen vorteilhaft auch mittels Kennziffern signalisiert werden können.

## Patentansprüche

1. Verfahren zum Bereitstellen ortsbezogener Dienste für ein Teilnehmerendgerät (UE) eines Funkkommunikationssystems, bei dem
das Teilnehmerendgerät (UE) Informationen (info) bezüglich zumindest eines Dienstes von einem lokalen Bakensender (BE) empfängt, wobei die von dem Bakensender (BE) ausgesendeten Informationen (info) in einem Rundsendekanal (S-CCPCH) des Bakensenders (BE) übertragen werden, wobei der Rundsendekanal (S-CCPCH) des Bakensenders (BE) kompatibel zu einem von einer Basisstation (NB) des Funkkommunikationssystems, in deren Funkzelle (ZNB) sich der Bakensender (BE) befindet, ausgesendeten Rundsendekanal (P-CCPCH) ist, wobei die Kompatibilität der Rundsendekanäle (S-CCPCH, P-CCPCH) durch Verwendung von zumindest einem Teil eines gleichen Frequenzbandes sichergestellt wird, und wobei in dem Rundsendekanal (P-CCPCH) oder einem Signalisierungskanal der Basisstation (NB) ein Verweis auf den Rundsendekanal (S-CCPCH) des Bakensenders (BE) signalisiert wird,
das Teilnehmerendgerät (UE) die empfangenen Informationen (info) auswertet, und
das Teilnehmerendgerät (UE) abhängig von dem Ergebnis der Auswertung einen Verbindungsaufbau zu einer Basisstation (NB) des Funkkommunikationssystems initiiert.

2. Verfahren nach Anspruch 1, bei dem
das Teilnehmerendgerät (UE) eine in dem Teilnehmerendgerät (UE) verwirklichte Sende-/Empfangseinrichtung (SEE) sowohl zum Senden/Empfangen von Signalen zu/von der Basisstation (NB) des Funkkommunikationssystems als auch zum Empfangen der Informationen (info) des Bakensenders (BE) verwendet.

3. Verfahren nach Anspruch 1 oder 2, bei dem
das Teilnehmerendgerät (UE) nach Aufbau der Verbindung zu der Basisstation (NB) weitere dienstbezogene Informationen (w-info) von einem Diensteserver (Server) über die Basisstation (NB) des Funkkommunikationssystems empfängt.

4. Verfahren nach einem vorstehenden Anspruch, bei dem das Teilnehmerendgerät (UE) die empfangenen Informationen (info) durch einen Vergleich mit zumindest einem in dem Teilnehmerendgerät (UE) gespeicherten Nutzerprofil auswertet, und bei zumindest einer Übereinstimmung zwischen empfangenen Informationen und Parametern des Nutzerprofils der Aufbau einer Verbindung zu der Basisstation (NB) initiiert wird.

5. Verfahren nach einem vorstehenden Anspruch, bei dem das Teilnehmerendgerät (UE) neben den dienstbezogenen Informationen (info) zumindest eine Identifikationsinformation (ID) des Bakensenders (BE) empfängt, und bei einem Aufbau einer Verbindung zu der Basisstation (NB) die Identifikationsinformation (ID) dem Funkkommunikationssystem signalisiert.

6. Bakensender (BE), aufweisend zumindest
eine Sendeeinrichtung (SEE) zum Aussenden von Informationen (info) bezüglich zumindest eines Dienstes in einem Rundsendekanal (S-CCPCH), wobei die Aussendungen zu Aussendungen in einem Rundsendekanal (P-CCPCH) einer Basisstation (NB) eines Funkkommunikationssystems, in dessen Funkzelle (ZNB) sich der Bakensender (BE) befindet, kompatibel sind, wobei die Kompatibilität der Rundsendekanäle (S-CCPCH, P-CCPCH) durch Verwendung von zumindest einem Teil eines gleichen Frequenzbandes sichergestellt wird, und wobei in dem Rundsendekanal (P-CCPCH) oder einem Signalisierungskanal der Basisstation (NB) ein Verweis auf den Rundsendekanal (S-CCPCH) des Bakensenders (BE) signalisiert wird, und
eine Steuereinrichtung (ST) zum Steuern der Aussendung der Informationen.

7. Bakensender (BE) nach Anspruch 6, weiterhin aufweisend eine Empfangseinrichtung (SEE) zum Empfangen von Signalen der Basisstation (NB), wobei die Steuereinrichtung (ST) ausgestaltet ist zum Auswerten der empfangenen Signale und zum Steuern der Aussendung der dienstbezogenen Informationen (info).

8. Bakensender (BE) nach Anspruch 7, wobei
die Empfangseinrichtung (SEE) Signale eines Rundsendekanals (P-CCPCH) oder Signalisierungskanals der Basisstation (NB) empfängt, und
die Steuereinrichtung (ST) die Aussendung der Informationen (info) in einem Rundsendekanal (S-CCPCH) des Bakensenders (BE) abhängig von den empfangenen Signalen der Basisstation (NB) steuert.

9. Bakensender (BE) nach einem der Ansprüche 6 bis 8, wobei die Steuereinrichtung (ST) eine Sendeleistung der Sendeeinrichtung (SEE) derart steuert, dass die dienstbezogenen Informationen (info) in einem im Vergleich zu dem geographischen Gebiet der Funkzelle (ZNB) geographischen Gebiet mit einer geringeren Ausdehnung als Funkzelle (ZBE) durch Teilnehmerendgeräte (UE) empfangbar sind.

10. Teilnehmerendgerät (UE) eines Funkkommunikationssystems, aufweisend zumindest
eine Sende-/Empfangseinrichtung (SEE) zum Senden und/oder Empfangen von Signalen zu/von einer Basisstation (NB) des Funkkommunikationssystems sowie zum Empfangen von in einem zu einem Rundsendekanal (P-CCPCH) der Basisstation (NB) kompatiblen Rundsendekanal (S-CCPCH) eines Bakensenders (BE) ausgesendeten Informationen (info) bezüglich zumindest eines ortsbezogenen Dienstes, wenn sich das Teilnehmerendgerät (UE) sowohl in einer Funkzelle (ZNB) der Basisstation (NB) als auch in einer Funkzelle (ZBE) des Bakensenders (BE) befindet, wobei die Kompatibilität der Rundsendekanäle (S-CCPCH, P-CCPCH) durch Verwendung von zumindest einem Teil eines gleichen Frequenzbandes sichergestellt wird, und wobei in dem Rundsendekanal (P-CCPCH) oder einem Signalisierungskanal der Basisstation (NB) ein Verweis auf den Rundsendekanal (S-CCPCH) des Bakensenders (BE) signalisiert wird, und
eine Steuereinrichtung (ST) zum Auswerten der empfangenen Informationen (info) des Bakensenders (BE) und zum Steuern eines Verbindungsaufbaus zu der Basisstation (NB) mittels der Sende-/Empfangseinrichtung (SEE) in Abhängigkeit von der Ergebnis der Auswertung.

11. Teilnehmerendgerät (UE) nach Anspruch 10, wobei die Sende-/Empfangseinrichtung (SEE) zusätzlich ausgestaltet ist zum Empfangen von weiteren dienstbezogenen Informationen (w-info) von der Basisstation (NB).

## Claims

1. Method for providing location-related services for user equipment (UE) of a radio communication system, wherein the user equipment (UE) receives information (info) relating to at least one service from a local beacon transmitter (BE), the information (info) transmitted by the beacon transmitter (BE) being transmitted on a broadcast channel (S-CCPCH) of the beacon transmitter (BE), the broadcast channel (S-CCPCH) of the beacon transmitter (BE) being compatible with a broadcast channel (P-CCPCH) transmitted by a base station (NB) of the radio communication system, in the radio cell (ZNB) of which the beacon transmitter (BE) is located, the compatibility of the broadcast channels (S-CCPCH, P-CCPCH) being ensured by using at least a portion of the same frequency band and a reference to the broadcast channel (S-CCPCH) of the beacon transmitter (BE) being signalled in the broadcast channel (P-CCPCH) or a signalling channel of the base station (NB), the user equipment (UE) evaluates the received information (info) and
the user equipment (UE) initiates the setting up of a connection to a base station (NB) of the radio communication system as a function of the evaluation result.

2. Method according to claim 1, wherein
the user equipment (UE) uses a transmit/receive facility (SEE) implemented in the user equipment (UE) both for transmitting/receiving signals to/from the base station (NB) of the radio communication system and also for receiving the information (info) from the beacon transmitter (BE).

3. Method according to claim 1 or 2, wherein
the user equipment (UE), after setting up the connection to the base station (NB), receives further service-related information (w-info) from a services server (server) via the base station (NB) of the radio communication system.

4. Method according to a preceding claim, wherein
the user equipment (UE) evaluates the received information (info) by means of a comparison with at least one user profile stored in the user equipment (UE) and if there is at least one match between received information and parameters of the user profile, the setting up of a connection to the base station (NB) is initiated.

5. Method according to a preceding claim, wherein
in addition to the service-related information (info) the user equipment (UE) receives at least one identification information item (ID) of the beacon transmitter (BE) and signals the identification information item (ID) to the radio communication system when a connection is set up to the base station (NB).

6. Beacon transmitter (BE), having at least a transmit facility (SEE) for transmitting information (info) relating to at least one service in a broadcast channel (S-CCPCH), the transmissions being compatible with transmissions in a broadcast channel (P-CCPCH) of a base station (NB) of a radio communication system, in the radio cell (ZNB) of which the beacon transmitter (BE) is located, the compatibility of the broadcast channels (S-CCPCH, P-CCPCH) being ensured by using at least a portion of the same frequency band and a reference to the broadcast channel (S-CCPCH) of the beacon transmitter (BE) being signalled in the broadcast channel (P-CCPCH) or a signalling channel of the base station (NB) and a control facility (ST) for controlling transmission of information.

7. Beacon transmitter (BE) according to claim 6, further having
a receive facility (SEE) for receiving signals from the base station (NB), the control facility (ST) being embodied to evaluate the received signals and to control transmission of the service-related information (info).

8. Beacon transmitter (BE) according to claim 7, wherein the receive facility (SEE) receives signals from a broadcast channel (P-CCPCH) or signalling channel of the base station (NB) and
the control facility (ST) controls transmission of the information (info) in a broadcast channel (S-CCPCH) of the beacon transmitter (BE) as a function of the signals received from the base station (NB).

9. Beacon transmitter according to one of claims 6 to 8,
wherein the control facility (ST) controls a transmit power of the transmit facility (SEE) such that the service-related information (info) is able to be received by user equipment (UE) as radio cell (ZBE) in a geographical area that is smaller in size than the geographical area of the radio cell (ZNB).

10. User equipment (UE) of a radio communication system, having
at least
a transmit/receive facility (SEE) for transmitting and/or receiving signals to/from a base station (NB) of the radio communication system and for receiving information (info) relating to a least one location-related service transmitted on a broadcast channel (S-CCPCH) of a beacon transmitter (BE) that is compatible with a broadcast channel (P-CCPCH) of the base station (NB), when the user equipment (UE) is located both in a radio cell (ZNB) of the base station (NB) and also in a radio cell (ZBE) of the beacon transmitter (BE), the compatibility of the broadcast channels (S-CCPCH, P-CCPCH) being ensured by using at least a portion of the same frequency band and a reference to the broadcast channel (S-CCPCH) of the beacon transmitter (BE) being signalled in the broadcast channel (P-CCPCH) or a signalling channel of the base station (NB) and
a control facility (ST) for evaluating the information (info) received from the beacon transmitter (BE) for controlling the setting up of a connection to the base station (NB) by means of the transmit/receive facility (SEE) as a function of the evaluation result.

11. User equipment (UE) according to claim 10, wherein the transmit/receive facility (SEE) is additionally embodied to receive further service-related information (w-info) from the base station (NB).

## Revendications

1. Procédé de fourniture de services locaux pour un terminal d'abonné (UE) d'un système de communications radio, dans lequel le terminal d'abonné (UE) reçoit des informations (info) relatives à au moins un service d'un émetteur de balise (BE), dans lequel les informations (info) envoyées par l'émetteur de balise (BE) sont transmises sur un canal de diffusion (S-CCPCH) de l'émetteur de balise (BE), le canal de diffusion (S-CCPCH) de l'émetteur de balise (BE) étant compatible avec un canal de diffusion (P-CCPCH) émis par une station de base (NB) du système de communications radio, dans la cellule radio (ZNB) de laquelle se trouve l'émetteur de balise (BE), dans lequel la compatibilité des canaux de diffusion (S-CCPCH, P-CCPCH) est assurée par l'utilisation d'au moins une partie d'une même bande de fréquences, et dans lequel, sur le canal de diffusion (P-CCPCH) ou un canal de signalisation de la station de base (NB), un renvoi au canal de diffusion (S- CCPCH) de l'émetteur de balise (BE) est signalé, le terminal d'abonné (UE) analyse les informations (info) reçues et le terminal d'abonné (UE) initie l'établissement d'une connexion avec une station de base (NB) du système de communications radio en fonction du résultat de l'analyse.

2. Procédé selon la revendication 1, dans lequel le terminal d'abonné (UE) utilise un dispositif d'émission/réception (SEE) réalisé dans le terminal d'abonné (UE) à la fois pour envoyer/recevoir de signaux vers/depuis la station de base (NB) du système de communications radio et pour recevoir les informations (info) de l'émetteur de balise (BE).

3. Procédé selon la revendication 1 ou 2, dans lequel le terminal d'abonné (UE), après établissement de la connexion avec la station de base (NB), reçoit d'autres informations de service (w-info) d'un serveur de services (Server) par l'intermédiaire de la station de base (NB) du système de communications radio.

4. Procédé selon l'une des revendications précédentes, dans lequel le terminal d'abonné (UE) analyse les informations reçues (info) par une comparaison avec au moins un profil d' utilisateur enregistré dans le terminal d'abonné (UE), et dans le cas d'au moins une concordance entre les informations reçues et des paramètres du profil utilisateur, l'établissement d'une connexion avec la station de base (NB) est initié.

5. Procédé selon l'une des revendications précédentes, dans lequel le terminal d'abonné (UE) reçoit, outre les informations de service (info), au moins une information d'identification (ID) de l'émetteur de balise (BE) et, en cas d'établissement d'une connexion avec la station de base (NB), signale l'information d'identification (ID) au système de communications radio.

6. Émetteur de balise (BE), présentant au moins un dispositif émetteur (SEE) pour envoyer des informations (info) relatives à au moins un service sur un canal de diffusion (S-CCPCH), les émissions étant compatibles avec des émissions sur un canal de diffusion (P-CCPCH) d'une station de base (NB) d'un système de communications radio, dans la cellule radio (ZNB) duquel se trouve l'émetteur de balise (BE), dans lequel la compatibilité des canaux de diffusion (S-CCPCH, P-CCPCH) est assurée par l'utilisation d'au moins une partie d'une même bande de fréquences, et dans lequel, sur le canal de diffusion (P-CCPCH) ou un canal de signalisation de la station de base (NB), un renvoi au canal de diffusion (S- CCPCH) de l'émetteur de balise (BE) est signalé, et un dispositif de commande (ST) pour commander l'émission des informations.

7. Émetteur de balise (BE) selon la revendication 6, présentant de plus un dispositif récepteur (SEE) pour recevoir des signaux de la station de base (NB), le dispositif de commande (ST) étant équipé pour analyser les signaux reçus et pour commander l'émission des informations de service (info).

8. Émetteur de balise (BE) selon la revendication 7, dans lequel le dispositif récepteur (SEE) reçoit des signaux d'un canal d'émission (P-CCPCH) ou d'un canal de signalisation de la station de base (NB), et le dispositif de commande (ST) commande l'émission des informations (info) sur un canal de diffusion (S-CCPCH) de l'émetteur de balise (BE) en fonction des signaux de la station de base (NB) reçus.

9. Émetteur de balise (BE) selon l'une des revendications 6 à 8, dans lequel le dispositif de commande (ST) commande une puissance d'émission du dispositif émetteur (SEE) de telle manière que les informations de service (info) peuvent être reçues comme cellule radio (ZBE) par des terminaux d'abonné (UE) dans une zone géographique de moindre extension que la zone géographique de la cellule radio (ZNB).

10. Terminal d'abonné (UE) d'un système de communications radio, présentant au moins un dispositif émetteur/récepteur (SEE) pour envoyer et/ou recevoir des signaux vers/depuis une station de base (NB) du système de communications radio ainsi que pour recevoir des informations (info) relatives à au moins un service local, émises sur un canal de diffusion (S-CCPCH) d'un émetteur de balises (BE) compatible avec un canal de diffusion (P-CCPCH) de la station de base (NB), quand le terminal d' abonné (UE) se trouve aussi bien dans une cellule radio (ZNB) de la station de base (NB) que dans une cellule radio (ZBE) de l'émetteur de balise (BE), dans la compatibilité des canaux de diffusion (S-CCPCH, P-CCPCH) est assurée par l'utilisation d'au moins une partie d'une même bande de fréquences, et dans lequel, sur le canal de diffusion (P-CCPCH) ou un canal de signalisation de la station de base (NB), un renvoi au canal de diffusion (S- CCPCH) de l'émetteur de balise (BE) est signalé, et un dispositif de commande (ST) pour analyser les informations (info) reçues de l'émetteur de balise (BE) et pour commander l'établissement d'une connexion avec la station de base (NB) au moyen du dispositif émetteur/récepteur (SEE) et en fonction du résultat de l'analyse.

11. Terminal d'abonné (UE) selon la revendication 10, dans lequel le dispositif émetteur/récepteur (SEE) est équipé en plus pour recevoir d'autres informations de service (w-info) depuis la station de base (NB)
